# EUROPEAN PATENT SPECIFICATION

(11) **EP 2 882 212 B1**
(45) Date of publication and mention of the grant of the patent: **13.07.2016**
(21) Application number: 13306681.1
(22) Date of filing: 09.12.2013
(51) Int. Cl.: H04W 16/20, H04W 16/32

(54) **A method for wireless communication in a communication network, and a network device therefor**
Verfahren zur Kommunikation in einem Kommunikationsnetzwerk, sowie Netzwerkgerät dafür
Procédé pour communiquer dans un réseau de communication, ainsi que dispositif de réseau correspondant

(43) Date of publication of application: 10.06.2015
(73) Proprietor: ALCATEL LUCENT, 92100 Boulogne-Billancourt (FR)
(72) Inventor: Maier, Simone, 70435 Stuttgart (DE); Yu, Xin, 70435 Stuttgart (DE)
(74) Representative: Kleinbub, Oliver

(56) References cited:
- WO-A2-01/33878
- WO-A2-2013/170169

## Description

### Field of the invention

The invention relates to a method for wireless communication in a communication network, and a network device adapted to perform said method.

### Background

Future mobile communication systems will rely on a so-called heterogeneous architecture comprising small cells. To simplify the network planning, the deployment of small cells should be dictated by radio frequency considerations and capacity needs only, and not by access and availability of power and backhaul links. State-of-the-art base station concepts for small cells are composed of two completely separate units. The first unit generates and receives the signals exchanged between the base station and the user terminals. The second unit receives and generates the signals exchanged on the wireless backhaul link between the base station and the core network. The two units are connected via a base band interface using an Ethernet link. Both units not only have a significant power consumption because of the complex architecture and contain a lot of functionality, but also suffer from a high component count and related cost and size.

International patent application publication WO 01/33878 describes a repeater apparatus for conveying a radio frequency (RF) signal into an environment closed-off to the RF-signal. The repeater apparatus includes a master transceiver unit capable of receiving the RF-signal, and one or more slave transceiver units positioned within the environment closed-off to the RF-signal. The master transceiver unit and the one or more slave transceiver units are connected to each other via one or more cables. The master transceiver unit comprises a local oscillator (LO) for generating a LO-signal at a LO-frequency, and frequency divider which divides the LO-frequency of the LO-signal by an integer to produce a divided LO signal. The master transceiver further includes a mixer to generate an intermediate-frequency (IF) signal responsive to the RF-signal and the LO-signal. The IF-signal is then transmitted to the one or more slave transceiver units.

### Summary

The object of the invention is thus to propose a method for wireless communication in a communication network with reduced CAPEX and OPEX costs and complexity and a high degree of local flexibility for the network planning.

In order to overcome the above-mentioned drawbacks, an autonomous radio access unit utilizing a wireless backhaul link is envisaged in the embodiments of the invention. Possible frequency bands for the wireless backhaul link supporting said architecture is the unlicensed 60GHz band or the 75GHz and 85GHz bands. At said frequencies and in general also at other frequencies, a required signal source or sources for generating a local oscillator signal, both for the up- and downconversion in the radio access unit, are challenging components. As the radio access unit needs to have a very good phase noise performance and a quite high output power to ensure sufficient system linearity, it has a very high power consumption, is quite big, and not a cheap device. Furthermore a GPS receiver (GPS = Global Positioning System) is needed to generate a required stable and synchronous reference signal.

In order to come to a radio access unit with low power consumption, small size, and which is also cheap, a local oscillator signal source should be avoided. Furthermore the power levels of the signals being transmitted on the wireless backhaul link shall be as low as possible to ensure a low power consumption of the transmitter and receiver of the radio access unit and central unit, and the wanted data signal should be the biggest part of the overall transmitted power.

A possible solution would be to transmit a required local oscillator signal for up- and downconversion in the radio access unit additionally to the wanted data signal on a radio frequency from a central unit to the radio access unit. For a good performance, i.e. high linearity and low conversion loss, of a passive or active mixer in the radio access unit, its local oscillator signal power level needs to be much higher than the power level of the radio frequency signal comprising the wanted data. The received local oscillator and radio frequency signals are both amplified with a low noise amplifier (LNA) in the radio access unit, and then split into two paths, one going to the radio frequency port of the mixer, the other one going to the local oscillator port of the mixer, but both containing local oscillator and radio frequency signals. Therefore, it is not possible to separately amplify the local oscillator signal compared to the radio frequency signal. That means that the local oscillator signal power level needs to be higher than the power level of the wanted radio frequency signal comprising the data already on the wireless link. Therefore, the power amplifier in the transmitter part of the central unit, and the low noise amplifier in the receiver part of the radio access unit both have to cope with a high local oscillator power which is unattractive because this means harder requirements regarding output power and linearity which will lead to increased device size, decreased efficiency and increased power consumption as well as higher weight and higher cost. Therefore it is favorable to keep the local oscillator signal power level on the wireless link lower than the radio frequency signal power level.

Thus, a basic idea of the embodiments of the invention is to separate in the radio access unit in front of the mixer the local oscillator signal and the radio frequency signal received via the wireless link. Such a separation of the local oscillator signal and the radio frequency signal can be performed using e.g. a duplex filter, or a splitter/coupler and separate subsequent filters. After said separation, the local oscillator signal power level can be adapted separately to an appropriate input power level of the mixer, e.g. by using an additional LNA so that the transmitted local oscillator signal power on the wireless link can be reduced to the same power level or favorably even slightly lower than the power level of the radio frequency signal comprising the data. The appropriate input power level of the mixer for the local oscillator signal is normally much higher, e.g. 15 dB higher, than the input power level of the mixer for the radio frequency signal.

The object of the invention is achieved by a method for wireless communication in a heterogeneous communication network as defined by claim 1.

The object of the invention is furthermore achieved by a network device for wireless communication in a heterogeneous communication network as defined by claim 13.

The invention is described in the following within the frame-work of 3GPP LTE, however the invention is not restricted to 3GPP LTE or enhancements thereof, but can in principle be applied in other networks that use a wireless access like e.g. in WiMAX networks (WiMAX = Worldwide Interoperability for Microwave Access).

Further developments of the invention can be gathered from the dependent claims and the following description.

### Brief description of the figures

In the following the invention will be explained further making reference to the attached drawings.
Fig. 1 schematically shows a first unit for wireless signal exchange with user terminals, which is connected via a baseband interface to a second unit for signal exchange via a wireless backhaul link with a core network.
Fig. 2 schematically shows a backhaul system architecture with a radio access unit for wireless signal exchange with user terminals, which is connected via a wireless link to a central unit for implementing embodiments of the invention.
Fig. 3 schematically shows a central unit with a wireless backhaul interface using an image filter in a transmitter part behind a mixer, and a duplex filter in a receiver part in front of a mixer according to an embodiment of the invention.
Fig. 4 schematically shows a central unit with a wireless backhaul interface using a duplex filter in a receiver part in front of a mixer, and a separate amplifier for a local oscillator signal in a transmitter part according to an embodiment of the invention.
Fig. 5 schematically shows a radio access unit with a wireless backhaul interface using a duplex filter in a receiver part in front of a mixer, and separate amplifiers for local oscillator signals for up- and downconversion according to an embodiment of the invention.
Fig. 6 schematically shows a radio access unit with a wireless backhaul interface using a duplex filter in a receiver part in front of a mixer, and a single amplifier for local oscillator signals for up- and downconversion according to an embodiment of the invention.
Fig. 7 schematically shows frequency schemes for downlink transmission from a central unit to a radio access unit according to an embodiment of the invention.
Fig. 8 schematically shows frequency schemes for uplink transmission from a radio access unit to a central unit according to an embodiment of the invention.

### Description of the embodiments

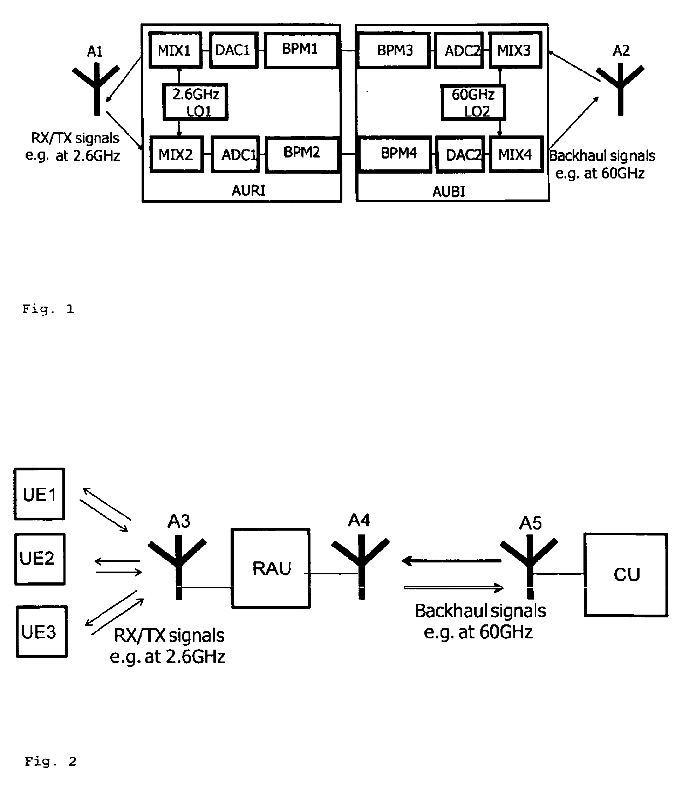

Fig. 1 shows a first access unit AURI with a radio interface, and a second access unit AUBI with a wireless backhaul interface which are interconnected via a baseband interface according to the state-of-the-art.

The first access unit AURI comprises 2 mixers MIX1 and MIX2, an analogue to digital converter ADC1, a digital to analogue converter DAC1, a local oscillator LO1, and 2 baseband processing modules BPM1 and BPM2.

A first input of the first access unit AURI is connected to the first baseband processing module BPM1, which is in turn connected to the digital to analogue converter DAC1. The digital to analogue converter DAC1 is connected to the first mixer MIX1, which is in turn connected to a first output of the first access unit AURI.

A second input of the first access unit AURI is connected to the second mixer MIX2, which is in turn connected to the analogue to digital converter ADC1. The analogue to digital converter ADC1 is connected to the second baseband processing module BPM2, which is in turn connected to a second output of the first access unit AURI.

The local oscillator LO1 is connected both to the first and second mixer MIX1 and MIX2.

The second access unit AUBI comprises 2 mixers MIX3 and MIX4, an analogue to digital converter ADC2, a digital to analogue converter DAC2, a local oscillator LO2, and 2 baseband processing modules BPM3 and BPM4.

A first input of the second access unit AUBI is connected to the third mixer MIX3, which is in turn connected to the second analogue to digital converter ADC2. The second analogue to digital converter ADC2 is connected to the third baseband processing module BPM3, which is in turn connected to a first output of the second access unit AUBI.

A second input of the second access unit AUBI is connected to the fourth baseband processing module BPM4, which is in turn connected to the second digital to analogue converter DAC2. The second digital to analogue converter DAC2 is connected to the fourth mixer MIX4, which is in turn connected to a second output of the second access unit AUBI.

The second local oscillator LO2 is connected both to the third and fourth mixer MIX3 and MIX4.

The first and second mixer MIX1 and MIX2 of the first access unit AURI are connected to a first antenna A1 for transmitting and receiving of radio signals.

The third and fourth mixer MIX3 and MIX4 of the second access unit AUBI are connected to a second antenna A2 for transmitting and receiving of backhaul signals.

The first baseband processing module BPM1 of the first access unit AURI is connected via an Ethernet interface to the third baseband processing module BPM3 of the second access unit AUBI, and the second baseband processing module BPM2 of the first access unit AURI is connected via an Ethernet interface to the fourth baseband processing module BPM4 of the second access unit AUBI.

The baseband processing modules BPM1-BPM4 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

In the uplink direction, an analogue RF signal, e.g. at 2.5GHz, transmitted from a user terminal is received via the first antenna A1 by the first access unit AURI where it gets mixed down in the second mixer MIX2 using the first local oscillator LO1, converted from analogue to digital domain in the first analogue to digital converter ADC1, and processed in the baseband domain in the second baseband processing module BPM2. In the second baseband processing module BPM2, the digital signal on baseband level is demodulated and decoded, and then a processing on a Media Access Control (MAC) layer and a Radio Link Control (RLC) layer is performed, before finally on a Packet Data Convergence Protocol (PDCP) layer the signal is transmitted to the second access unit AUBI.

In the second access unit AUBI the signal gets also processed in the baseband domain in the fourth baseband processing module BPM4, in which the signal received on the Packet Data Convergence Protocol (PDCP) layer is processed on a Media Access Control (MAC) layer and a Radio Link Control (RLC) layer, before it is coded and modulated. Then, the signal is converted again into the analogue domain in the second digital to analogue converter DAC2, and then mixed up to the wireless backhaul transmit frequency, e.g. at 60GHz, in the fourth mixer MIX4 using the second local oscillator LO2 before the signal is finally radiated into the air via the second antenna A2 and will be received by the central unit, which is not depicted in fig. 1 for the sake of simplicity.

The downlink direction works similar. The central unit transmits an analogue backhaul signal, e.g. at 60.2GHz, which is received by the second access unit AUBI via the second antenna A2, where it gets mixed down in the third mixer MIX3 using the second local oscillator LO2, converted from analogue to digital domain in the second analogue to digital converter ADC2, and processed in the baseband domain in the third baseband processing module BPM3. In the third baseband processing module BPM3, the digital signal on baseband level is demodulated and decoded, and then a processing on a Media Access Control (MAC) layer and a Radio Link Control (RLC) layer is performed, before finally on a Packet Data Convergence Protocol (PDCP) layer the signal is transmitted to the first access unit AURI via an Ethernet interface.

This baseband signal is then processed in the baseband domain in the first baseband processing module BPM1, in which the signal received on the Packet Data Convergence Protocol (PDCP) layer is processed on a Media Access Control (MAC) layer and a Radio Link Control (RLC) layer, before it is coded and modulated. Then, the signal is converted again into the analogue domain in the first digital to analogue converter DAC1, and then mixed up to the radio transmit frequency, e.g. at 2.65GHz, in the first mixer MIX1 using the first local oscillator LO1 before the signal is finally radiated into the air via the first antenna A1 and will be received by a user terminal.

Due to the two completely separated first and second access units AURI and AUBI, this existing architecture is quite complex, has a high component count and therefore a high power consumption, and requires a big size and heavy weight. Furthermore it has a limited data rate. These characteristics are obviously in contrast to the requirements for a completely autonomous wireless cube or metro cell, especially the high power demand.

Fig. 2 schematically shows a backhaul system architecture with a radio access unit for wireless signal exchange with user terminals, which is connected via a wireless link to a central unit for implementing embodiments of the invention.

The communication network comprises a central unit CU, three antennas A3, A4 and A5, a radio access unit RAU, and three user terminals UE1, UE2, and UE3.

The central unit is connected both to a core network, which is not shown in fig. 2 for the sake of simplicity, and to the antenna A5 for a wireless backhaul link at e.g. 60GHz to the radio access unit RAU.

The radio access unit RAU is connected both to the antenna A3 for radio connection at e.g. 2.6GHz to the three user terminals UE1, UE2, and UE3, and to the antenna A4 for a wireless backhaul link at e.g. 60GHz to the central unit CU.

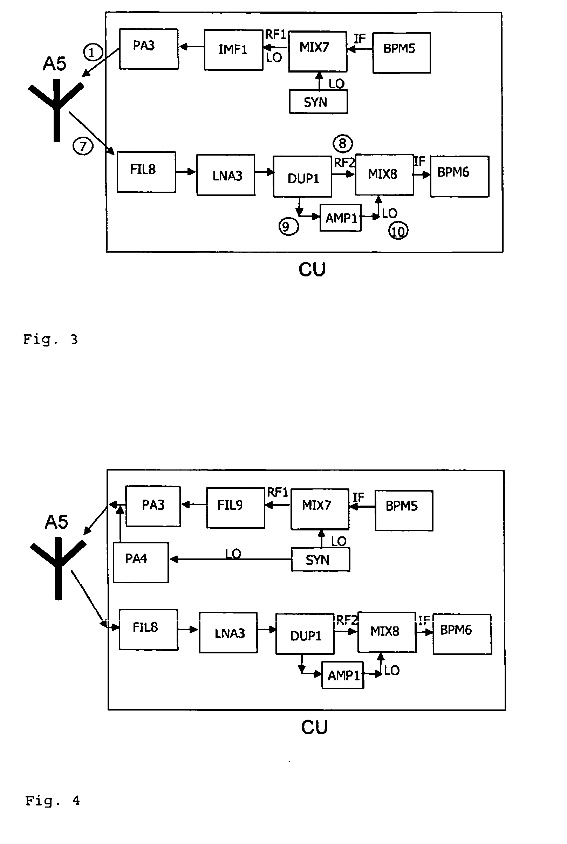

More detailed descriptions of the structure of the radio access unit RAU and the central unit CU depicted in fig. 2 according to embodiments of the invention are shown in figs. 3, 4 and figs. 5, 6 respectively, and will be described in the following.

As already mentioned above, a basic idea of the embodiments is a separation of a local oscillator signal from a radio frequency signal comprising data in the radio access unit RAU, so that the local oscillator signal power level can be adapted separately to an appropriate input power level of the mixer. As a consequence, the transmitted local oscillator signal power on the wireless link can be reduced to the same power level or favorably even slightly lower than the power level of the radio frequency signal comprising the data. An appropriate central unit for that purpose, i.e. for adjusting power levels of the local oscillator signal and the radio frequency signal comprising data is depicted in fig. 3 and described in the following.

Fig. 3 schematically shows a central unit with a wireless backhaul interface using an image filter in a transmitter part behind a mixer, and a duplex filter in a receiver part in front of a mixer according to an embodiment of the invention.

The central unit CU comprises two baseband processing modules BPM5 and BPM6, two mixers MIX7 and MIX8, a local oscillator SYN, a power amplifier PA3, a low noise amplifier LNA3, an amplifier AMP1, a duplex filter DUP1, an image filter IMF1, and a filter FIL8.

An input of the central unit CU is connected to the filter FIL8, which is in turn connected to an input of the low noise amplifier LNA3. An output of the low noise amplifier LNA3 is further connected to an input of the duplex filter DUP1. A first output of the duplex filter DUP1 is connected to a first input of the mixer MIX8, and a second output of the duplex filter DUP1 is connected to the amplifier AMP1, which is in turn connected to a second input of the mixer MIX8. An output of the mixer MIX8 is connected to an input of the baseband processing module BPM6.

An output of the baseband processing module BPM5 is connected to a first input of the mixer MIX7, and an output of the local oscillator SYN is connected to a second input of the mixer MIX7. An output of the mixer MIX7 is connected to an input of the image filter IMF1, and an output of the image filter IMF1 is connected to an input of the power amplifier PA3. The power amplifier PA3 is in turn connected to an output of the central unit CU.

The filter FIL8 and the power amplifier PA3 of the central unit CU are connected to the antenna A5 for exchanging backhaul signals with a radio access unit RAU as e.g. depicted in fig. 2 and described above via a wireless backhaul link.

The baseband processing modules BPM5 and BPM6 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The central unit CU receives via a backbone interface, which is not depicted in fig. 3 for the sake of simplicity, from a core network a downlink signal which shall be transmitted to the user terminals. The downlink signal is coded and modulated, and then upconverted to an intermediate frequency signal IF with a carrier frequency of e.g. 2.6GHz in the baseband processing module BPM5. Then, the intermediate frequency signal IF is upconverted in the mixer MIX7 using a local oscillator signal LO from the local oscillator SYN at 60GHz. The output signal of the mixer MIX7 consists of the wanted radio frequency signal RF1 e.g. at 62.6GHz, the local oscillator signal LO at 60GHz, and an image signal at 57.4GHz. The image filter IMF1 is used to filter out the image signal at 57.4GHz, and to suppress the local oscillator signal LO to a power level of the radio frequency signal RF1, or slightly below the power level of the radio frequency signal RF1. The radio frequency signal RF1 and the local oscillator signal LO are amplified to the wanted transmit power level by the power amplifier PA3, before the radio frequency signal RF1 and the local oscillator signal LO are transmitted to the radio access unit RAU1 via the antenna A5 and the wireless backhaul link.

In an alternative of the embodiment, the power amplifier PA3 is located in front of the image filter IMF1 in the downlink processing chain.

Said mixer MIX7, which can e.g. be a diode mixer or ring diode mixer, active or passive mixer, produces not only the wanted radio frequency signal RF1, but will also pass the local oscillator signal LO and generates a lot of unwanted spurious signals, e.g. the image signal at 57.4GHz. In that case it is very likely that at the RF output of the mixer MIX7, the local oscillator signal power level is still much higher than the radio frequency signal power level and needs to be suppressed. This can be done either using an adapted band pass filter after the mixer MIX7, which will not only cancel out the unwanted image signal, but will also attenuate the local oscillator signal LO to the same or lower power level than that of the radio frequency signal RF1 in the pass band.

In an alternative of the embodiment, a very narrow band amplifier, preferably with a notch filter for reducing image signals, is used after the mixer MIX7 to boost the radio frequency signal RF1 comprising the wanted data signal, and at the same time to adjust the local oscillator signal power level by having less gain on that frequency.

In a further alternative of the embodiment, it is also possible to use a duplex filter after the mixer MIX7, so that the radio frequency signal RF1 is available at one output port and the local oscillator signal LO on the other output port of the duplex filter. Then the local oscillator signal LO can be attenuated and the radio frequency signal RF1 can be amplified separately, preferably also automatically with an automatic gain control loop. After that the local oscillator signal LO and the radio frequency signal RF1 can be combined again, and increased in power level with a power amplifier before they get radiated via the wireless link to the radio access unit RAU. Alternatively, the local oscillator signal LO and the radio frequency signal RF1 first get amplified to the appropriate transmission power levels via separate power amplifiers and are then combined before the antenna A5 or even radiated over 2 different antennas and then combined in the air.

In the uplink direction, the central unit CU receives from the radio access unit RAU via the wireless link and the antenna A5 the local oscillator signal LO, and a further radio frequency signal RF2, e.g. at 62.5GHz. In the filter FIL8, the wanted local oscillator signal LO and further radio frequency signal RF2 are filtered out, and are amplified using the low noise amplifier LNA3. In an alternative of the embodiment, the low noise amplifier LNA3 is positioned in front of the filter FIL8. Then, the duplex filter DUP1 is used to separate the local oscillator signal LO and the further radio frequency signal RF2.

The further radio frequency signal RF2 is connected to an RF input port of the mixer MIX8, and the local oscillator signal LO gets amplified by the amplifier AMP1 to boost it to the wanted high power level for which the mixer MIX8 has the best performance in terms of linearity and conversion loss before the local oscillator signal LO gets connected to the local oscillator port of the mixer MIX8. The further radio frequency signal RF2 gets downconverted in the mixer MIX8 to an intermediate frequency signal IF with a carrier frequency of e.g. 2.5GHz, and the phase noise will cancel out in this mixing process before the intermediate frequency signal IF comprising the data is further processed in the base band domain in the baseband processing module BPM6.

In the baseband processing module BPM6, the intermediate frequency signal IF is demodulated and decoded, and is transmitted to the core network via a backbone interface, which is not depicted in fig. 3 for the sake of simplicity.

In a further embodiment, a more complex mixer MIX7, as e.g. a double balanced mixer with an inherent high suppression of the local oscillator signal LO and the image signal is used. An appropriate central unit CU comprising such a more complex mixer MIX7, as e.g. a double balanced mixer with an inherent high suppression of the local oscillator signal LO and the image signal, is depicted in fig. 4 and described in the following.

Fig. 4 schematically shows a central unit with a wireless backhaul interface using a duplex filter in a receiver part in front of a mixer, and a separate amplifier for a local oscillator signal in a transmitter part according to an embodiment of the invention.

The structure of the central unit CU depicted in fig. 4 corresponds in principle to the structure of the central unit CU depicted in fig. 3, so that in the following only the differences compared to the central unit CU depicted in fig. 3 will be described.

The local oscillator SYN is additionally connected to a further power amplifier PA4 via a second output, and an output signal of the further power amplifier PA4 is combined with the output signal of the power amplifier PA3 before the local oscillator signal LO, and the further radio frequency signal RF2 are radiated via the wireless link to the radio access unit RAU.

If the local oscillator signal LO at the output port of the mixer MIX7 is suppressed too much, then it might be beneficial to additionally inject a portion of the local oscillator signal LO after the mixer MIX7 in front of the following power amplifier PA3 or just in front of the antenna A5 with adapted power level and phase. This is done e.g. by sending the local oscillator signal LO also to the further power amplifier PA4, e.g. via a differential output of the local oscillator SYN, to adjust the power level and phase, and by combining the output signal of the further power amplifier PA4 with the output signal of the power amplifier PA3. Alternatively, this is done by using a splitter or coupler between the local oscillator SYN and the input for the local oscillator signal LO of the mixer MIX7 which is connected both to mixer MIX7 and to the further power amplifier PA4.

In an embodiment of the invention, a phase shifter to adjust all phase shifts occurring in the transmission chain, as e.g. the time delay which occurred in the mixer MIX7, is used in front of or after the further power amplifier PA4.

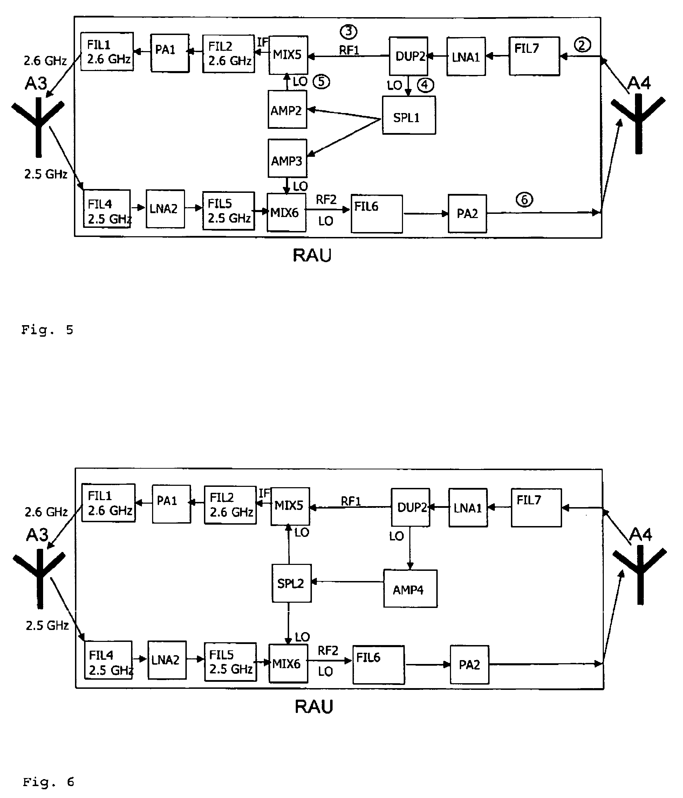

Fig. 5 schematically shows a radio access unit with a wireless backhaul interface using a duplex filter in a receiver part in front of a mixer, and separate amplifiers for local oscillator signals for up- and downconversion according to an embodiment of the invention.

The radio access unit RAU receives the local oscillator signal LO and the radio frequency signal RF1 transmitted from the central unit CU via an antenna A4.

The local oscillator signal LO and the radio frequency signal RF1 are filtered out in the filter FIL7, before they are amplified by a low noise amplifier LNA1. A duplex filter DUP2 is then used to separate the local oscillator signal LO and the radio frequency signal RF1.

The radio frequency signal RF1 is fed into an RF port of a mixer MIX5, and the local oscillator signal LO is split up into 2 paths.

In a first path, the local oscillator signal LO is amplified in an amplifier AMP2 to an appropriate level for downconversion in the mixer MIX5, and then fed into a local oscillator port of the mixer MIX5. In the amplifier AMP2, the local oscillator signal LO is adjusted separately in power level, i.e. increased in power so that the local oscillator signal power is much higher again than the radio frequency signal power, and optimized in phase with a phase shifter, i.e. compensated for the phase shift in the amplifier AMP2, duplex filter DUP2 or splitter SPL1, for a good mixing performance, i.e. for a high linearity, a low insertion loss, and phase noise cancellation. In principle, as a phase shift can also already occur in the central unit CU e.g. in the filters FIL9 or IMF1, or in the power amplifiers PA3 and PA4, the phase shift can also be compensated solely or in addition in the central unit CU. Since the power levels will vary depending on the wireless link distance it may be also beneficial to use an automatic gain control loop to provide constantly the optimum local oscillator signal power for the mixer MIX5. A mixer operated with an optimum local oscillator signal power level also has an increased range of possible radio frequency/intermediate frequency input signal power levels and at the same time maintaining good mixing performance.

In a second path, the local oscillator signal LO is amplified in an amplifier AMP3 to an appropriate level for upconversion in a mixer MIX6 in an uplink path, and then fed into a local oscillator port of the mixer MIX6.

The radio frequency signal RF1 gets downconverted in the mixer MIX5 to an intermediate frequency signal IF with a carrier frequency of e.g. 2.6GHz. The wanted intermediate frequency signal IF comprising the data without the cancelled phase noise is selected at an IF port of the mixer MIX5 with a narrow band filter FIL2, and amplified in an amplifier PA1 before it gets again filtered in a filter FIL1 and radiated via an antenna A3 to the user terminals UE1-UE3 as depicted in fig. 2.

In the uplink direction, a received intermediate frequency signal from a user terminal UE1-UE3 as e.g. depicted in fig. 2 via the antenna A3 e.g. at 2.5 GHz is filtered in a filter FIL4, and then amplified in a low noise amplifier LNA2 to an appropriate level for usage of an intermediate frequency signal in the mixer MIX6 for upconversion. After amplification in the low noise amplifier LNA2, the intermediate frequency signal is again filtered in a filter FIL5.

The mixer MIX6 uses the received local oscillator signal LO from the central unit CU also as local oscillator signal for an upconversion of the intermediate frequency signal to the further radio frequency signal RF2. The following filter FIL6 again blocks unwanted image signals and suppresses the power level of the local oscillator signal LO sufficiently to below the power level of the further radio frequency signal RF2. Before both the local oscillator signal LO, and the further radio frequency signal RF2 get radiated via the antenna A4 to the central unit CU they are amplified by a common power amplifier PA2.

In an alternative of the embodiment, it is also possible to use a duplex filter after the mixer MIX6, so that the further radio frequency signal RF2 is available at one output port and the local oscillator signal LO on the other output port of the duplex filter. Then the local oscillator signal LO can be attenuated and the further radio frequency signal RF2 can be amplified separately, preferably also automatically with an automatic gain control loop. After that the local oscillator signal LO and the further radio frequency signal RF2 can be combined again, and increased in power level with a power amplifier before they get radiated via the wireless link to the central unit CU. Alternatively, the local oscillator signal LO and the further radio frequency signal RF2 first get amplified to the appropriate transmission power levels via separate power amplifiers and are then combined before the antenna A4 or even radiated over 2 different antennas and then combined in the air. Said alternative of the embodiment is in an analogue way also applicable in the central unit CU e.g. replacing the image filter IMF1 in fig. 3 or the filter FIL9 in fig. 4 by a duplex filter.

In an alternative embodiment of the radio access unit depicted in fig. 6 and described in the following, after separation in the duplex filter, the local oscillator signal LO is first amplified in a common amplifier and then split into two paths.

Fig. 6 schematically shows a radio access unit with a wireless backhaul interface using a duplex filter in a receiver part in front of a mixer, and a single amplifier for local oscillator signals for up- and downconversion according to an embodiment of the invention.

The structure of the radio access unit RAU depicted in fig. 6 corresponds in principle to the structure of the radio access unit RAU depicted in fig. 5, so that in the following only the differences compared to the radio access unit RAU depicted in fig. 5 will be described.

The local oscillator signal LO is sent from the duplex filter DUP2 to a common amplifier AMP4 in which the local oscillator signal is amplified to an appropriate power level for the mixers MIX5 and MIX6, and from the common amplifier AMP 4, the local oscillator signal LO is sent to a splitter SPL2. From the splitter SPL2, the local oscillator signal LO is in turn sent both to the mixer MIX5 for downconversion, and to the mixer MIX6 for upconversion.

In the embodiments depicted in figs. 3-6 and described above, the amplifiers AMP1-AMP4 can have a fix or variable gain, or can be controlled by an automatic gain control loop.

In the embodiments depicted in figs. 36 and described above, the amplifiers AMP1-AMP4 can be a so-called injection locked oscillator, which provides a constant output level even with variable input power.

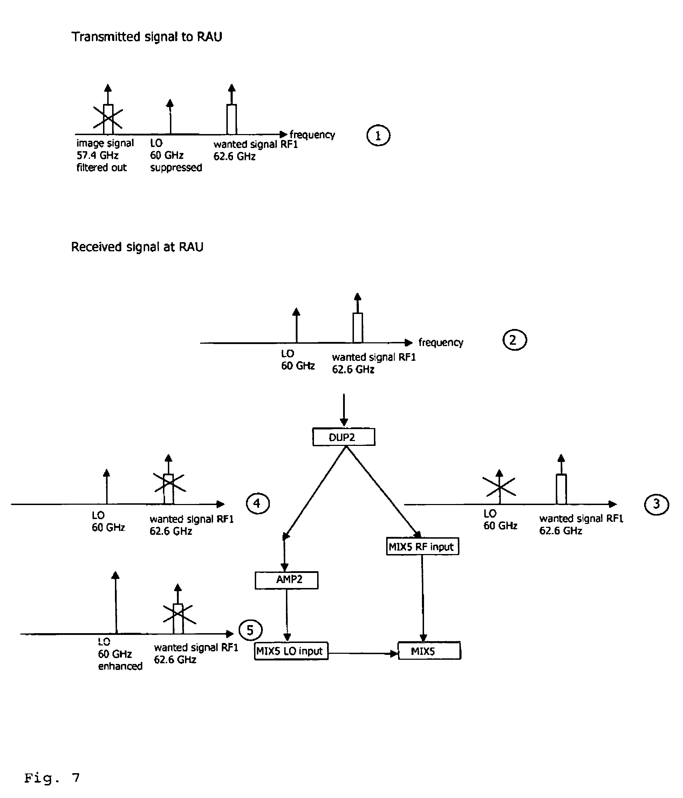

Fig. 7 schematically shows frequency schemes for downlink transmission from a central unit to a radio access unit according to an embodiment of the invention. The frequency schemes are indicated for different positions in the central unit CU as e.g. depicted in fig. 3, and in the radio access unit RAU as e.g. depicted in fig. 5.

In the downlink direction from the central unit CU to the radio access unit RAU, at position 1 as indicated in figs. 3 and 7, the central unit CU transmits the wanted radio frequency signal RF1 comprising data at 62.6GHz, a suppressed local oscillator signal at 60GHz and filters out the image signal at 57.4GHz before the antenna A5.

At position 2 as indicated in figs. 5 and 7, the radio access unit RAU receives the local oscillator signal LO and the radio frequency signal RF1.

After splitting up the local oscillator signal LO and the radio frequency signal RF1 in the duplexer DUP2 after the low noise amplifier LNA1, the radio frequency signal RF1 is transmitted to the RF port of mixer MIX5 at position 3 as indicated in figs. 5 and 7, and the local oscillator signal LO is transmitted to the splitter SPL1 at position 4 as indicated in figs. 5 and 7.

After amplification of the local oscillator signal LO in the amplifier AMP2 to the wanted power level, e.g. 15dB above the power level of the radio frequency signal RF1, to ensure a good mixing performance, the local oscillator signal LO is fed into the local oscillator port of the mixer MIX5 at position 5 as indicated in figs. 5 and 7.

At the output of the mixer MIX5, the intermediate frequency signal IF at 2.6GHz is available, and if the phase relationship between the radio frequency signal RF1 and the local oscillator signal LO is kept equal, then the downconversion cancels out the phase noise of the 60GHz local oscillator signal LO.

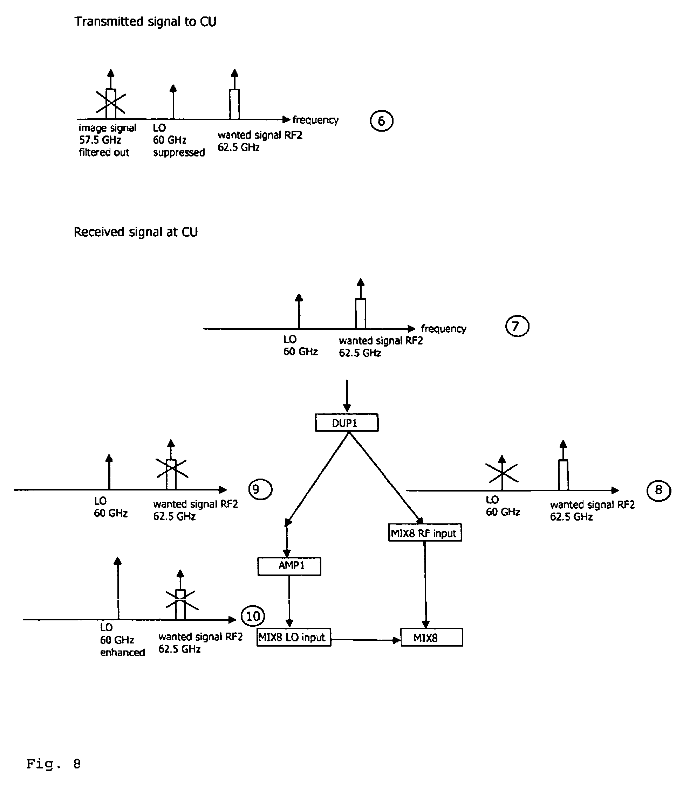

Fig. 8 schematically shows frequency schemes for uplink transmission from a radio access unit to a central unit according to an embodiment of the invention. The frequency schemes are indicated for different positions in the central unit CU as e.g. depicted in fig. 3, and in the radio access unit RAU as e.g. depicted in fig. 5.

In the uplink direction from the radio access unit RAU to the central unit CU, at position 6 as indicated in figs. 5 and 8, the radio access unit RAU transmits the wanted further radio frequency signal RF2 comprising data at 62.5GHz, a suppressed local oscillator signal at 60GHz and filters out the image signal at 57.5GHz before the antenna A5.

At position 7 as indicated in figs. 3 and 8, the central unit CU receives the local oscillator signal LO and the further radio frequency signal RF2.

After splitting up the local oscillator signal LO and the further radio frequency signal RF2 in the duplexer DUP1 after the low noise amplifier LNA3, the further radio frequency signal RF2 is transmitted to the RF port of mixer MIX8 at position 8 as indicated in figs. 3 and 8, and the local oscillator signal LO is transmitted to the amplifier AMP1 at position 9 as indicated in figs. 3 and 8.

After amplification of the local oscillator signal LO in the amplifier AMP1 to the wanted power level, e.g. 15dB above the power level of the further radio frequency signal RF2, to ensure a good mixing performance, the local oscillator signal LO is fed into the local oscillator port of the mixer MIX8 at position 10 as indicated in figs. 3 and 8.

At the output of the mixer MIX8, the intermediate frequency signal IF at 2.5GHz is available, and if the phase relationship between the further radio frequency signal RF2 and the local oscillator signal LO is kept equal, then the downconversion cancels out the phase noise of the 60GHz local oscillator signal LO.

## Claims

1. A method for wireless communication in a heterogeneous communication network comprising at least one central unit (CU) and at least one radio access unit (RAU) for wireless connection with user terminals (UE1, UE2, UE3), the method comprising:
- upconverting a signal on an intermediate frequency or baseband signal by using a local oscillator signal (LO) in a mixer (MIX7) in the at least one central unit to generate an output signal comprising a radio frequency signal (RF1) and the local oscillator signal (LO);
- adjusting the power level of at least one of the radio frequency signal (RF1) and the local oscillator signal (LO) such that the power level of the local oscillator signal (LO) is equal or lower than the power level of the radio frequency signal (RF1);
- transmitting the local oscillator signal (LO) and the radio frequency signal (RF1) from the at least one central unit (CU) to the at least one radio access unit (RAU) via a wireless link;
- separating the local oscillator signal (LO) and the radio frequency signal (RF1) received via the wireless link in the at least one radio access unit (RAU);
- amplifying the local oscillator signal (LO) as separated in the at least one radio access unit (RAU); and
- using the local oscillator signal (LO) as amplified for downconversion of the radio frequency signal (RF1) in the at least one radio access unit (RAU).

2. A method according to claim 1, wherein separating the local oscillator signal (LO) and radio frequency signal (RF1) as received via the wireless link in performed in the at least one radio access unit (RAU) by using a duplex filter (DUP2) or a splitter or coupler followed by two separate bandpass filters.

3. A method according to claim 1 or 2, wherein in the at least one radio access unit (RAU) or in the central unit (CU), the method further comprises correcting the local oscillator signal (LO) or the radio frequency signal (RF1) in phase for compensation of a phase shift.

4. A method according to any one of the preceding claims, wherein the method, after separating, further comprises splitting the local oscillator signal (LO), and using a splitted part of the local oscillator signal (LO) for upconversion of an intermediate frequency signal in the at least one radio access unit (RAU) resulting in a further radio frequency signal (RF2) for transmission to the at least one central unit (CU).

5. A method according to claim 4, further comprising
- transmitting the further radio frequency signal (RF2) and the splitted part of the local oscillator signal (LO) from the at least one radio access unit (RAU) to the at least one central unit (CU) via the wireless link;
- separating the splitted part of the local oscillator signal (LO) and the further radio frequency signal (RF2) as received via the wireless link in the at least one central unit (CU);
- amplifying the splitted part of the local oscillator signal (LO) in the at least one central unit (CU); and
- using the splitted part of the local oscillator signal (LO) for downconversion of the further radio frequency signal (RF2) in the at least one central unit (CU).

6. A method according to any of the preceding claims, wherein the method further comprises filtering an output signal of the mixer (MIX7) using an adapted band pass filter (IMF1) for reducing image signals and for attenuating the local oscillator signal (LO).

7. A method according to any one of the preceding claims, wherein the method further comprises amplifying an output signal of the mixer (MIX7) using a narrow band amplifier (PA3) for boosting the radio frequency signal (RF1).

8. A method according to claim 7, wherein filtering the output signal of the mixer (MIX7) is done using a notch filter for reducing image signals.

9. A method according to any one of the preceding claims, wherein the method further comprises:
- feeding an output signal of the mixer (MIX7) to a further duplex filter for separating the local oscillator signal (LO) and the radio frequency signal (RF1),
- attenuating the local oscillator signal (LO) ; and
- amplifying the radio frequency signal (RF1).

10. A method according to claim 9, wherein the method, afterwards, further comprises combining, amplifying and transmitting the local oscillator signal (LO) and the radio frequency signal (RF1) to the at least one radio access unit (RAU) via the wireless link.

11. A method according to claim 9, wherein the method, afterwards, further comprises amplifying the local oscillator signal (LO) and the radio frequency signal (RF1) to appropriate transmission power levels using separate power amplifiers, and transmitting the local oscillator signal (LO) and the radio frequency signal (RF1) to the at least one radio access unit (RAU) via the wireless link using at least one antenna.

12. A method according to any one of the preceding claims, wherein the method further comprises:
- feeding the local oscillator signal (LO) to an input of the mixer (MIX7) for upconversion of the signal on the intermediate frequency or the baseband signal to the radio frequency signal (RF1), and in addition also combining the local oscillator signal (LO) with an output signal of the mixer (MIX7) and
- transmitting the local oscillator signal (LO) to the at least one radio access unit (RAU) via the wireless link for downconversion of the radio frequency signal (RF1) in the at least one radio access unit (RAU).

13. A network device (CU; RAU) for wireless communication in a heterogeneous communication network comprising said network device (CU; RAU) and a further network device (RAU; CU), wherein said network device (CU; RAU) is configured to:
- upconvert a signal on an intermediate frequency or baseband signal by using a local oscillator signal (LO) in a mixer (MIX7; MIX6) to generate an output signal comprising a radio frequency signal (RF1; RF2) and the local oscillator signal (LO);
- adjust the power level of at least one of the radio frequency signal (RF1; RF2) and the local oscillator signal (LO) such that the power level of the local oscillator signal (LO) is equal or lower than the power level of the radio frequency signal (RF1; RF2); and
- transmit the local oscillator signal (LO) and the radio frequency signal (RF1; RF2) to the further network device (RAU; CU) over a wireless link;
wherein the network device for providing the local oscillator signal (LO) for said upconversion is further configured to:
- receive a part of the local oscillator signal (LO) as transmitted and a further radio frequency signal (RF2;RF1) which are transmitted from the further network device (RAU; CU) to the network device (CU; RAU) via the wireless link;
- separate said part of the local oscillator signal (LO) and the further radio frequency signal (RF2; RF1) received via the wireless link;
- amplify the local oscillator signal (LO); and
- split the part of the local oscillator signal (LO) in a portion used for downconversion of the further radio frequency signal (RF2; RF1) and a portion used for said upconversion of the intermediate frequency or baseband signal.

14. A network device according to claim 13, wherein said network device (CU; RAU) for said adjustment of the power level of at least one of the radio frequency signal (RF1; RF2) and the local oscillator signal (LO) comprises at least one device out of the list of devices consisting of an adapted band pass filter (IMF1; FIL6) for reducing image signals and for attenuating the local oscillator signal (LO), a narrow band amplifier (PA3; PA2) for boosting the radio frequency signal (RF1; RF2), a notch filter for reducing image signals, a duplex filter for separating the local oscillator signal (LO) and the radio frequency signal (RF1; RF2) and separate power amplifiers for amplifying the local oscillator signal (LO) and the radio frequency signal (RF1; RF2) if separated

15. A network device according to claim 13 or 14, wherein said network device (CU; RAU) is at least one of a group of a radio access unit (RAU) for wireless connection with user terminals (UE1, UE2, UE3) and a central unit (CU) for transmission and reception of backhaul signals.

## Patentansprüche

1. Verfahren zur drahtlosen Kommunikation in einem heterogenen Kommunikationsnetzwerk, umfassend mindestens eine Zentraleinheit (CU) und mindestens eine Funkzugangseinheit (RAU) für eine drahtlose Verbindung mit Benutzerendgeräten (UE1, UE2, UE3), wobei das Verfahren Folgendes umfasst:
- Hochkonvertieren eines Signals auf einer Zwischenfrequenz oder Basisbandsignals durch Verwenden eines Lokaloszillatorsignals (LO) in einem Mischer (MIX7) in der mindestens einen Zentraleinheit, um ein Ausgangssignal zu erzeugen, das ein Funkfrequenzsignal (RF1) und das Lokaloszillatorsignal (LO) umfasst;
- Anpassen des Leistungspegels von mindestens einem des Funkfrequenzsignals (RF1) und des Lokaloszillatorsignals (LO), so dass der Leistungspegel des Lokaloszillatorsignals (LO) gleich oder geringer ist als der Leistungspegel des Funkfrequenzsignals (RF1);
- Senden des Lokaloszillatorsignals (LO) und des Funkfrequenzsignals (RF1) von der mindestens einen Zentraleinheit (CU) an die mindestens eine Funkzugangseinheit (RAU) über eine Drahtlosverbindung;
- Trennen des über die Drahtlosverbindung empfangenen Lokaloszillatorsignals (LO) und Funkfrequenzsignals (RF1) in der mindestens einen Funkzugangseinheit (RAU);
- Verstärken des Lokaloszillatorsignals (LO) nach dem Trennen in der mindestens einen Funkzugangseinheit (RAU); und
- Verwenden des Lokaloszillatorsignals (LO) nach dem Verstärken zum Herunterkonvertieren des Funkfrequenzsignals (RF1) in der mindestens einen Funkzugangseinheit (RAU).

2. Verfahren nach Anspruch 1, wobei das Trennen des Lokaloszillatorsignals (LO) und Funkfrequenzsignals (RF1) nach dem Empfang über die Drahtlosverbindung in der mindestens einen Funkzugangseinheit (RAU) durchgeführt wird unter Verwendung eines Duplex-Filters (DUP2) oder eines Splitters oder Kopplers, gefolgt von zwei separaten Bandpassfiltern.

3. Verfahren nach Anspruch 1 oder 2, wobei in der mindestens einen Funkzugangseinheit (RAU) oder in der Zentraleinheit (CU) das Verfahren weiterhin das Korrigieren des Lokaloszillatorsignals (LO) oder des Funkfrequenzsignals (RF1) in Phase zum Kompensieren einer Phasenverschiebung umfasst.

4. Verfahren nach einem beliebigen der vorstehenden Ansprüche, wobei das Verfahren nach dem Trennen weiterhin das Splitten des Lokaloszillatorsignals (LO) und das Verwenden eines gesplitteten Teils des Lokaloszillatorsignals (LO) zum Hochkonvertieren eines Zwischenfrequenzsignals in der mindestens einen Funkzugangseinheit (RAU) umfasst, was zu einem weiteren Funkfrequenzsignal (RF2) zum Senden an die mindestens eine Zentraleinheit (CU) führt.

5. Verfahren nach Anspruch 4, weiterhin umfassend:
- Senden des weiteren Funkfrequenzsignals (RF2) und des gesplitteten Teils des Lokaloszillatorsignals (LO) von der mindestens einen Funkzugangseinheit (RAU) an die mindestens eine Zentraleinheit (CU) über die Drahtlosverbindung;
- Trennen des über die Drahtlosverbindung empfangenen gesplitteten Teils des Lokaloszillatorsignals (LO) und des weiteren Funkfrequenzsignals (RF2) in der mindestens einen Zentraleinheit (CU);
- Verstärken des gesplitteten Teils des Lokaloszillatorsignals (LO) in der mindestens einen Zentraleinheit (CU); und
- Verwenden des gesplitteten Teils des Lokaloszillatorsignals (LO) zum Herunterkonvertieren des weiteren Funkfrequenzsignals (RF2) in der mindestens einen Zentraleinheit (CU).

6. Verfahren nach einem beliebigen der vorstehenden Ansprüche, wobei das Verfahren weiterhin das Filtern eines Ausgangssignals des Mischers (MIX7) unter Verwendung eines angepassten Bandpassfilters (IMF1) zum Reduzieren von Bildsignalen und zum Dämpfen des Lokaloszillatorsignals (LO) umfasst.

7. Verfahren nach einem beliebigen der vorstehenden Ansprüche, wobei das Verfahren weiterhin das das Verstärken eines Ausgangssignals des Mischers (MIX7) unter Verwendung eines Schmalbandverstärkers (PA3) zum Verstärken des Funkfrequenzsignals (RF1) umfasst.

8. Verfahren nach Anspruch 7, wobei das Filtern des Ausgangssignals des Mischers (MIX7) unter Verwendung eines Kerbfilters zum Reduzieren von Bildsignalen erfolgt.

9. Verfahren nach einem beliebigen der vorstehenden Ansprüche, wobei das Verfahren weiterhin umfasst:
- Leiten eines Ausgangssignals des Mischers (MIX7) zu einem weiteren Duplex-Filter, um das Lokaloszillatorsignal (LO) und das Funkfrequenzsignal (RF1) zu trennen,
- Dämpfen des Lokaloszillatorsignals (LO); und
- Verstärken des Funkfrequenzsignals (RF1).

10. Verfahren nach Anspruch 9, wobei das Verfahren danach weiterhin das Vereinen, Verstärken und Senden des Lokaloszillatorsignals (LO) und des Funkfrequenzsignals (RF1) an die mindestens eine Funkzugangseinheit (RAU) über die Drahtlosverbindung umfasst.

11. Verfahren nach Anspruch 9, wobei das Verfahren danach weiterhin das Verstärken des Lokaloszillatorsignals (LO) und des Funkfrequenzsignals (RF1) auf geeignete Sendeleistungspegel unter Verwendung separater Leistungsverstärker und das Senden des Lokaloszillatorsignals (LO) und des Funkfrequenzsignals (RF1) an die mindestens eine Funkzugangseinheit (RAU) über die Drahtlosverbindung unter Verwendung von mindestens einer Antenne umfasst.

12. Verfahren nach einem beliebigen der vorstehenden Ansprüche, wobei das Verfahren weiterhin umfasst:
- Leiten des Lokaloszillatorsignals (LO) zu einem Eingang des Mischers (MIX7) zum Hochkonvertieren des Signals auf der Zwischenfrequenz oder des Basisbandsignals auf das Funkfrequenzsignal (RF1) und zusätzlich auch das Vereinen des Lokaloszillatorsignals (LO) mit einem Ausgangssignal des Mischers (MIX7) und
- Senden des Lokaloszillatorsignals (LO) an die mindestens eine Funkzugangseinheit (RAU) über die Drahtlosverbindung zum Herunterkonvertieren des Funkfrequenzsignals (RF1) in der mindestens einen Funkzugangseinheit (RAU).

13. Netzwerkvorrichtung (CU; RAU) zur drahtlosen Kommunikation in einem heterogenen Kommunikationsnetzwerk, umfassend besagte Netzwerkvorrichtung (CU; RAU) und eine weitere Netzwerkvorrichtung (CU; RAU), wobei besagte Netzwerkvorrichtung (CU; RAU) ausgelegt ist zum:
- Hochkonvertieren eines Signals auf einer Zwischenfrequenz oder Basisbandsignals durch Verwenden eines Lokaloszillatorsignals (LO) in einem Mischer (MIX7; MIX6), um ein Ausgangssignal zu erzeugen, das ein Funkfrequenzsignal (RF1; RF2) und das Lokaloszillatorsignal (LO) umfasst;
- Anpassen des Leistungspegels mindestens eines des Funkfrequenzsignals (RF1; RF2) und des Lokaloszillatorsignals (LO), sodass der Leistungspegel des Lokaloszillatorsignals (LO) gleich oder geringer ist als der Leistungspegel des Funkfrequenzsignals (RF1; RF2); und
- Senden des Lokaloszillatorsignals (LO) und des Funkfrequenzsignals (RF1; RF2) an die weitere Netzwerkvorrichtung (RAU; CU) über eine Drahtlosverbindung;
wobei die Netzwerkvorrichtung zum Bereitstellen des Lokaloszillatorsignals (LO) zum besagten Hochkonvertieren weiterhin ausgelegt ist zum:
- Empfangen eines Teils des Lokaloszillatorsignals (LO) nach dem Senden und eines weiteren Funkfrequenzsignals (RF2; RF1), die von der weiteren Netzwerkvorrichtung (RAU; CU) an die Netzwerkvorrichtung (CU; RAU) über die Drahtlosverbindung gesendet werden;
- Trennen des über die Drahtlosverbindung empfangenen besagten Teils des Lokaloszillatorsignals (LO) und des weiteren Funkfrequenzsignals (RF2; RF1);
- Verstärken des Lokaloszillatorsignals (LO); und
- Splitten des Teils des Lokaloszillatorsignals (LO) in einen Abschnitt, der zum Herunterkonvertieren des weiteren Funkfrequenzsignals (RF2; RF1) verwendet wird, und einen Abschnitt, der zum besagten Hochkonvertieren des Zwischenfrequenz- oder Basisbandsignals verwendet wird.

14. Netzwerkvorrichtung nach Anspruch 13, wobei besagte Netzwerkvorrichtung (CU; RAU) zur besagten Anpassung des Leistungspegels von mindestens einem des Funkfrequenzsignals (RF1; RF2) und des Lokaloszillatorsignals (LO) mindestens eine Vorrichtung aus der Liste von Vorrichtungen umfasst, bestehend aus einem angepassten Bandpassfilter (IMF1; FIL6) zum Reduzieren von Bildsignalen und zum Dämpfen des Lokaloszillatorsignals (LO), einem Schmalbandverstärker (PA3; PA2) zum Verstärken des Funkfrequenzsignals (RF1; RF2), einem Kerbfilter zum Reduzieren von Bildsignalen, einem Duplex-Filter zum Trennen des Lokaloszillatorsignals (LO) und des Funkfrequenzsignals (RF1; RF2) und separaten Leistungsverstärkern zum Verstärken des Lokaloszillatorsignals (LO) und des Funkfrequenzsignals (RF1; RF2), falls getrennt.

15. Netzwerkvorrichtung nach Anspruch 13 oder 14, wobei besagte Netzwerkvorrichtung (CU; RAU) mindestens eine ist aus einer Gruppe von einer Funkzugangseinheit (RAU) zur drahtlosen Verbindung mit Benutzerendgeräten (UE1, UE2, UE3) und einer Zentraleinheit (CU) zum Senden und Empfangen von Backhaul-Signalen.

## Revendications

1. Procédé de communication sans fil dans un réseau de communication hétérogène, comprenant au moins une unité centrale (CU) et au moins une unité d'accès radio (RAU) servant à la connexion sans fil avec des terminaux d'utilisateur (UE1, UE2, UE3), le procédé comprenant les étapes suivantes :
- élever en fréquence un signal sur une fréquence intermédiaire ou un signal en bande de base en utilisant un signal d'oscillateur local (LO) dans un mélangeur (MIX7) dans l'au moins une unité centrale afin de générer un signal de sortie comprenant un signal à radiofréquence (RF1) et le signal d'oscillateur local (LO) ;
- ajuster le niveau de puissance d'au moins un parmi le signal à radiofréquence (RF1) et le signal d'oscillateur local (LO) de telle sorte que le niveau de puissance du signal d'oscillateur local (LO) soit inférieur ou égal au niveau de puissance du signal à radiofréquence (RF1) ;
- émettre le signal d'oscillateur local (LO) et le signal à radiofréquence (RF1) depuis l'au moins une unité centrale (CU) vers l'au moins une unité d'accès radio (RAU) par le biais d'une liaison sans fil ;
- séparer le signal d'oscillateur local (LO) et le signal à radiofréquence (RF1) reçus par le biais de la liaison sans fil dans l'au moins une unité d'accès radio (RAU) ;
- amplifier le signal d'oscillateur local (LO) tel qu'il est séparé dans l'au moins une unité d'accès radio (RAU) ; et
- utiliser le signal d'oscillateur local (LO) tel qu'il est amplifié pour abaisser en fréquence le signal à radiofréquence (RF1) dans l'au moins une unité d'accès radio (RAU).

2. Procédé selon la revendication 1, selon lequel l'étape de séparation du signal d'oscillateur local (LO) et du signal à radiofréquence (RF1) tels qu'ils sont reçus par le biais de la liaison sans fil est exécutée dans l'au moins une unité d'accès radio (RAU) en utilisant un filtre duplex (DUP2) ou un diviseur ou un coupleur suivi par deux filtres passe-bande distincts.

3. Procédé selon la revendication 1 ou 2, selon lequel, dans l'au moins une unité d'accès radio (RAU) ou dans l'unité centrale (CU), le procédé comprend en outre corriger le signal d'oscillateur local (LO) ou le signal à radiofréquence (RF1) en phase pour compenser un déphasage.

4. Procédé selon l'une quelconque des revendications précédentes, selon lequel le procédé, après l'étape de séparation, comprend en outre la division du signal d'oscillateur local (LO) et l'utilisation d'une partie divisée du signal d'oscillateur local (LO) pour l'élévation en fréquence d'un signal à fréquence intermédiaire dans l'au moins une unité d'accès radio (RAU), ce qui résulte en un signal à radiofréquence supplémentaire (RF2) destiné à être émis vers l'au moins une unité centrale (CU).

5. Procédé selon la revendication 4, comprenant en outre les étapes suivantes :
- émettre le signal à radiofréquence supplémentaire (RF2) et la partie divisée du signal d'oscillateur local (LO) depuis l'au moins une unité d'accès radio (RAU) vers l'au moins une unité centrale (CU) par le biais de la liaison sans fil ;
- séparer la partie divisée du signal d'oscillateur local (LO) et le signal à radiofréquence supplémentaire (RF2) reçus par le biais de la liaison sans fil dans l'au moins une unité centrale (CU) ;
- amplifier la partie divisée du signal d'oscillateur local (LO) dans l'au moins une unité centrale (CU) ; et
- utiliser la partie divisée du signal d'oscillateur local (LO) pour abaisser en fréquence le signal à radiofréquence supplémentaire (RF2) dans l'au moins une unité centrale (CU).

6. Procédé selon l'une quelconque des revendications précédentes, selon lequel le procédé comprend en outre filtrer un signal de sortie d'un signal de sortie du mélangeur (MIX7) en utilisant un filtre passe-bande adapté (IMF1) pour réduire les signaux d'image et pour atténuer le signal d'oscillateur local (LO).

7. Procédé selon l'une quelconque des revendications précédentes, selon lequel le procédé comprend en outre amplifier un signal de sortie du mélangeur (MIX7) en utilisant un amplificateur à bande étroite (PA3) pour amplifier le signal à radiofréquence (RF1).

8. Procédé selon la revendication 7, selon lequel filtrer le signal de sortie du mélangeur (MIX7) est effectué en utilisant un filtre à bande d'arrêt étroite pour réduire les signaux d'image.

9. Procédé selon l'une quelconque des revendications précédentes, selon lequel le procédé comprend en outre les étapes suivantes :
- acheminer un signal de sortie du mélangeur (MIX7) à un filtre duplex supplémentaire pour séparer le signal d'oscillateur local (LO) et le signal à radiofréquence (RF1) ;
- atténuer le signal d'oscillateur local (LO) ; et
- amplifier le signal à radiofréquence (RF1).

10. Procédé selon la revendication 9, selon lequel le procédé comprend en plus, après, combiner, amplifier et émettre le signal d'oscillateur local (LO) et le signal à radiofréquence (RF1) vers l'au moins une unité d'accès radio (RAU) par le biais de la liaison sans fil.

11. Procédé selon la revendication 9, selon lequel le procédé comprend en plus, après, combiner, amplifier le signal d'oscillateur local (LO) et le signal à radiofréquence (RF1) à des niveaux de puissance d'émission appropriés en utilisant des amplificateurs de puissance séparés, et émettre le signal d'oscillateur local (LO) et le signal à radiofréquence (RF1) vers l'au moins une unité d'accès radio (RAU) par le biais de la liaison sans fil en utilisant au moins une antenne.

12. Procédé selon l'une quelconque des revendications précédentes, selon lequel le procédé comprend en outre les étapes suivantes :
- acheminer le signal d'oscillateur local (LO) à une entrée du mélangeur (MIX7) pour l'élévation en fréquence du signal sur la fréquence intermédiaire ou le signal en bande de base au signal à radiofréquence (RF1), et en plus également combiner le signal d'oscillateur local (LO) avec un signal de sortie du mélangeur (MIX7); et
- émettre le signal d'oscillateur local (LO) vers l'au moins une unité d'accès radio (RAU) par le biais de la liaison sans fil pour abaisser en fréquence le signal à radiofréquence (RF1) dans l'au moins une unité d'accès radio (RAU).

13. Périphérique de réseau (CU ; RAU) pour la communication sans fil dans un réseau de communication hétérogène comprenant ledit périphérique de réseau (CU ; RAU) et un périphérique de réseau supplémentaire (RAU ; CU), ledit périphérique de réseau (CU ; RAU) étant configuré pour :
- élever en fréquence un signal sur une fréquence intermédiaire ou un signal en bande de base en utilisant un signal d'oscillateur local (LO) dans un mélangeur (MIX7 ; MIX6) afin de générer un signal de sortie comprenant un signal à radiofréquence (RF1 ; RF2) et le signal d'oscillateur local (LO) ;
- ajuster le niveau de puissance d'au moins un parmi le signal à radiofréquence (RF1 ; RF2) et le signal d'oscillateur local (LO) de telle sorte que le niveau de puissance du signal d'oscillateur local (LO) soit inférieur ou égal au niveau de puissance du signal à radiofréquence (RF1 ; RF2) ; et
- émettre le signal d'oscillateur local (LO) et le signal à radiofréquence (RF1 ; RF2) vers le périphérique de réseau supplémentaire (RAU ; CU) par le biais d'une liaison sans fil ;
le périphérique de réseau destiné à délivrer le signal d'oscillateur local (LO) pour ladite étape d'élévation en fréquence étant en outre configuré pour :
- recevoir une partie du signal d'oscillateur local (LO) tel qu'il est émis et un signal à radiofréquence supplémentaire (RF2 ; RF1) qui sont émis depuis le périphérique de réseau supplémentaire (RAU ; CU) vers le périphérique de réseau (CU ; RAU) par le biais de la liaison sans fil ;
- séparer ladite partie du signal d'oscillateur local (LO) et le signal à radiofréquence supplémentaire (RF2 ; RF1) reçus par le biais de la liaison sans fil ;
- amplifier le signal d'oscillateur local (LO) ; et
- diviser la partie du signal d'oscillateur local (LO) en une portion utilisée pour abaisser en fréquence le signal à radiofréquence supplémentaire (RF2 ; RF1) et une portion utilisée pour ladite élévation en fréquence de la fréquence intermédiaire ou du signal en bande de base.

14. Périphérique de réseau selon la revendication 13, avec lequel ledit périphérique de réseau (CU ; RAU), pour ledit ajustement du niveau de puissance d'au moins un parmi le signal à radiofréquence (RF1 ; RF2) et le signal d'oscillateur local (LO), comprend au moins un dispositif parmi la liste des dispositifs constituée d'un filtre passe-bande adapté (IMF1 ; FIL6) destiné à réduire les signaux d'image et à atténuer le signal d'oscillateur local (LO), d'un amplificateur à bande étroite (PA3 ; PA2) destiné à amplifier le signal à radiofréquence (RF1 ; RF2), d'un filtre à bande d'arrêt étroite destiné à réduire les signaux d'image, d'un filtre duplex destiné à séparer le signal d'oscillateur local (LO) et le signal à radiofréquence (RF1 ; RF2), et d'amplificateurs de puissance séparés destinés à amplifier le signal d'oscillateur local (LO) et le signal à radiofréquence (RF1 ; RF2) s'ils sont séparés.

15. Périphérique de réseau selon la revendication 13 ou 14, avec lequel ledit périphérique de réseau (CU ; RAU) est au moins l'un parmi un groupe comprenant une unité d'accès radio (RAU) servant à la connexion sans fil avec des terminaux d'utilisateur (UE1, UE2, UE3) et une unité centrale (CU) servant à l'émission et à la réception de signaux de raccordement.
